# EUROPÄISCHE PATENTSCHRIFT

(11) **EP 0 737 405 B1**
(45) Veröffentlichungstag und Bekanntmachung des Hinweises auf die Patenterteilung: **10.02.1999**
(21) Anmeldenummer: 95904495.9
(22) Anmeldetag: 16.12.1994
(51) Int. Cl.: H04N 13/00

(54) **VERFAHREN UND VORRICHTUNG ZUR AUFZEICHNUNG UND WIEDERGABE VON STEREOSKOPISCHEN VIDEOBILDERN**
METHOD AND DEVICE FOR THE RECORDING AND REPRODUCTION OF STEREOSCOPIC VIDEO IMAGES
PROCEDE ET DISPOSITIF D'ENREGISTREMENT ET DE RESTITUTION D'IMAGES VIDEO STEREOSCOPIQUES

(30) Priorität: 29.12.1993 CH 3890/93
(43) Veröffentlichungstag der Anmeldung: 16.10.1996
(73) Patentinhaber: Leica Mikroskopie Systeme AG, 9435 Heerbrugg (CH)
(72) Erfinder: STÜTTLER, Herbert, M., A-6830 Rankweil (AT)
(74) Vertreter: Stamer, Harald
(86) Internationale Anmeldenummer: EP9404197
(87) Internationale Veröffentlichungsnummer: WO9518511

(56) Entgegenhaltungen:
- EP-A- 0 536 722
- WO-A-93/08665
- US-A- 5 084 763

## Beschreibung

Diese Anmeldung betrifft ein Verfahren und eine Vorrichtung zur Aufzeichnung und Wiedergabe von stereoskopischen Videobildem nach dem Oberbegriff der Ansprüche 1 und 13. Aus der DE 41 34 033 C1 ist ein solches Verfahren bekannt. Nachteilig an diesem bekannten Verfahren ist, daß die Wiedergabequalität der auf dem Monitor dargestellten Stereobilder nicht ausreichend ist.

Aus der US-A-5 084 763 ist ein Verfahren und ein Gerät zur Darstellung stereoskopischer Fernsehbilder bekannt. Diese können als Halbbilder im Zeitmultiplex übertragen und aufgezeichnet werden, wobei bei der Wiedergabe im Zeittakt einer Halbbilddauer zwischen linkem und rechtem Kanal umgeschaltet wird. Für jeden Kanal wird die Signalverarbeitung getrennt vorgenommen, und die beiden Kanäle werden zur Unterdrückung von Flimmern mit doppelter Frequenz auf dem Monitor dargestellt. Es wird nichts darüber ausgesagt, wie bei der Wiedergabe vom VTR eine Unterscheidung der Bilder des rechten bzw. linken Kanals erreicht wird.

Der Erfindung liegt daher die Aufgabe zugrunde, ein einfaches und sicheres Verfahren und eine Vorrichtung zu finden, so daß die Wiedergabequalität sichergestellt ist.

Die Aufgabe wird durch die Merkmale des Ansprüche 1 und 13 gelöst. Weiterbildungen der Erfindungen ergeben sich aus den Merkmalen der Unteransprüche.

Die Videobilder werden von zwei Bilderfassungsgeräten erzeugt, wobei sowohl das Signal der dem linken Auge zugeordneten Kamera als auch das Signal der dem rechten Auge zugeordneten Kamera üblicherweise gerade und ungerade Halbbbilder aufweist. Die Erfindung umfasst auch eine Ausführungsform, bei der pro Bilderfassungsgerät der Einfachheit halber nur je ein Halbbild erzeugt wird.

Bei einem bevorzugten Ausführungsbeispiel werden die Signale der beiden Kameras einer Schnittstelle (Videosignalkoppler) zugeführt, an deren Ausgang zeitlich nacheinander die geraden Halbbilder einer Kamera und die ungeraden Halbbilder der anderen Kamera anliegen. Das Ausgangssignal der Schnittstelle wird dem Aufnahmegerät zugeführt.

Die Zuordnung der Videohalbbilder bei der Wiedergabe des aufgezeichneten Videosignals wurde üblicherweise durch ein bei der Aufzeichnung dem Videosignal zugefügtem Kennsignal ermöglicht. Dieses Kennsignal deutete die Verbindung zwischen geraden und ungeraden Halbbildem und rechter und linker Kamera an. Bei der Wiedergabe des aufgezeichneten Videosignals wurde dieses Kennsignal zur Aufteilung des Videosignals in zwei Kanäle, eines für das rechte Auge und eines für das linke Auge zugeordneten Bilder, benutzt. Dieses Kennsignal ist aufgrund der Erfindung nicht mehr unbedingt erforderlich und daher nur bei einer abgewandelten Ausführungsform vorgesehen.

Wird aber z.B. im Zuge einer Störung an der Wiedergabevorrichtung das Kennsignal nicht detektiert, dann kann die rechts - links - Trennung des wiedergegebenen Videosignals nicht einwandfrei durchgeführt werden. Auch dieses Problem wird durch die Erfindung behoben. Erfindungsgemäß wird ein Verfahren angegeben, bei dem die Trennung des wiedergegebenen Videosignals ohne das Aufzeichnen eines zusätzlichen Kennsignals möglich ist.

Mit der Koppelung eines Synchronisationssignales an ein Halbbild wird der Vorteil erzielt, daß dieses Signal direkt Bestandteil des Videosignales ist und daher eine Detektion leichter möglich ist, als wenn es sich - wie bekannt - um ein separates Signal handeln würde.

Ein Vorteil der Erfindung besteht darin, daß kanalweise ungerade Halbbilder einerseits und gerade Halbbilder andererseits von den Bilderfassungsgeräten detektiert und aufgezeichnet werden. Es werden jeweils ein Halbbild der aus zwei Halbbildem bestehenden Teilbilder je Kanal detektiert und in einem Aufnahmegerät aufgezeichnet. Zur Wiedergabe werden die Halbbilder kanalweise weiterverarbeitet und jeweils einem Vollbildspeicher zugeführt, der vorzugsweise mit jeweils einem Interpolator verbunden ist zur Erzeugung des fehlenden Halbbildes. Nach Zusammenfügung des von dem Interpolator generierten Bildes mit dem bereits in dem Vollbildspeicher vorliegenden Halbbild entsteht je Kanal ein aus zwei Halbbildem bestehendes Teilbild, die von einem Framegrabber mit 4-facher Bildfrequenz ausgelesen und einem Wiedergabemonitor zur Wiedergabe zur Verfügung gestellt werden. Während die Bilderfassungsgeräte die Teilbilder bzw. Vollbilder mit einer Bildfrequenz von beispielsweise 25 Hz erfassen, werden in dem Wiedergabemonitor Teilbilder bzw. Vollbilder des ersten und zweiten Kanals oder anders ausgedrückt die rechten und die linken Teilbilder bzw. Vollbilder mit einer Bildfrequenz von 100 Hz dargestellt. Dies führt zu einem flimmerfreien Eindruck des Videobildes durch den Betrachter. Mit der Darstellung von Vollbildem statt Halbbildem wird ein helleres Bild erzielt.

Nähere Einzelheiten der Erfindung sind aus den Ansprüchen, den Figuren und zugehörigen Beschreibungsteilen zu entnehmen. Die Figuren zeigen dabei insbesondere:
- Fig.1: ein erstes Ausführungsbeispiel eines Aufnahmeteils einer erfindungsgemässen Vorrichtung mit zwei zusammengehörigen CCD's;
- Fig.2: ein zweites Ausführungsbeispiel eines Aufnahmeteils mit zwei synchron gesteuerten Videokameras und einem Videoaufnahmegerät;
- Fig.3: ein drittes Ausführungsbeispiel eines Aufnahmeteils mit zwei Videoaufnahmegeräten;
- Fig.4: eine erstes Ausführungsbeispiel eines Wiedergabeteils einer erfindungsgemässen Vorrichtung mit einer Interpolationsschaltung und einer Schnittstelle, die das Darstellen von Paaren (VB) von Halbbildem auf einem Monitor gestattet;
- Fig.5: ein zweites Ausführungsbeispiel eines Wiedergabeteils bei dem am Monitor progressiv gescannte Vollbilder altemierend dargestellt werden können;
- Fig.6: eine Alternative für den ersten Teil des Wiedergabeteiles nach Fig.4 oder Fig.5;
- Fig.7: eine weitere Alternative für den ersten Teil des Wiedergabeteiles nach Fig.4 oder Fig.5;
- Fig.8: ein drittes Ausführungsbeispiel eines Widergabeteiles für die durchgehende Verarbeitung von vollständigen Paaren (VB) von Halbbildern (HB) aus zwei Videoaufnahmegeräten;
- Fig.9: ein praktisches Beispiel eines ausgeführten Interfaces mit einem Videorekordereingang YC/VCR, einem Videoausgang YC/VCR und zwei Videokameraeingängen IPM zur Aufzeichnung von stereoskopischen Bildern auf einem herkömmlichen Videorekorder und
- Fig.10: einen zeitlichen Ablauf der Signalfolge bei einem bevorzugten Ausführungsbeispiel der Erfindung mit Vollbilddarstellung am Monitor.

Gleiche Bezugszeichen bedeuten gleiche Bauteile. Gleiche Bezugszeichen mit unterschiedlichen Indizes bedeuten ähnliche Bauteile.

### BEZUGSZEICHENLISTE und BEGRIFFSDEFINITIONEN

### Im Sinne der Erfindung bedeuten:

Ein stereoskopisches Videobild zwei zusammengehörende Teilbilder eines linken und rechten Bildkanales, wobei die Teilbilder wenigstens ein Video-Halbbild (HB) aufweisen, gegebenenfalls jedoch als Vollbild ausgebildet sind, in dem sie aus einem zusammengehörenden Paar (VB) von zwei Halbbildern (HB) aufgebaut sind. Ein solches Paar (VB) kann im Sinne der Erfindung auch aus zwei aufeinanderfolgenden (interlaced) Halbbildern (HB) oder aus zwei gleichzeitig vorhandenen und somit nicht mehr aufgetrennten Halbbildern (progressive scan) bestehen.

Interpolierte Halbbilder (HB) sind Halbbilder, die durch rechnerische Auswertung von vorhandener Bildinformation aus einem Halbbild (HB) gewonnen wurden. Vollbilder können sowohl aus HB als auch aus HB gewonnen worden sein.

Die Bezeichnung HB/A steht für Halbbilder (HB) eines Bildkanales, die Bezeichnung HB/B steht für Halbbilder des zugehörigen anderen Bildkanales. Die Indizierung X. bedeutet die fortlaufende Numerierung des jeweiligen Halbbildes (HB). Die Indizierung .1 oder.2 steht für das jeweils gerade oder ungerade Halbbild (HB). Bei der Aufzeichnung von nur je einem Halbbild pro Teilbild-Kanal wird in der Regel ein gerades und ein ungerades Halbbild (HB) aufgezeichnet werden. Dies ist jedoch nicht zwingend, sofern durch ein zusätzliches z.B. Synchronisationssignal an wenigstens einem der beiden Halbbild-Signale deren Zuordnung zum richtigen Kanal möglich ist.

A bzw. C steht für Kontaktstellen, die im Betriebsfall miteinander verbunden sind.
1 Videoaufnahmegerät; darunter fallen z.B.: Videorekorder, Bildplattengeräte, digitale Speicher aller Art usw.
2 Videowiedergabegerät; darunter fallen alle Geräte, mit denen Aufzeichnungen von Geräten nach 1) wiedergegeben werden können.
3 Kameraelektronik; darunter fallen alle Einrichtungen, die von einem optoelektronischen Aufnahmegerät erfasste Bilder elektronisch erfassen und verarbeitbar machen.
4 Halbbilddetektor; darunter fallen alle Signalanalyse- Vorrichtungen, die ein Halbbild (z.B. ein gerades) detektieren bzw. von einem zugehörigen zweiten Halbbild (z.B. einem ungeraden) unterscheiden können und gegebenenfalls geeignete Umschaltungen zur Signalweiterleitung vomehmen können.
5 Bilderfassungseinrichtung; darunter fallen Still- oder Bewegt-Videokameras, jedwede CCD- oder sonstige opto-elektronische Array-Schaltungen usw.
6 Video-Signal-Koppler; darunter fallen alle Schnittstellen, die Signale aus zwei parallelen Kanälen - insbesondere altemierend - auf einen elektronischen Pfad schalten. Sie können insbesondere als Graphikkarte ausgebildet sein.
7 Kamerasynchronisation; darunter fallen Synchronisierelemente, die sowohl zwei Kameraelektroniken zueinander in Gleichtakt bringen, als auch gegebenenfalls weitere Elemente zur Bildverarbeitung takten und/oder Signale generieren, die bei Bedarf auf Videodatenträger aufzeichenbar sind.
8 Vollbildspeicher; darunter fallen alle Speicherelemente, die wenigstens zwei zusammengehörende Halbbilder eines Teilbildes oder wenigstens ein Vollbild speichem können.
9 Framegrabber; darunter fallen alle elektronischen Schaltungen, die Signale eines Video-Voll- oder Halbbildes in digital weiterverarbeitbare Signale umwandeln und für die Darstellung auf einem Computermonitor aufbereiten.
11 Monitor; darunter fallen alle Bilddarstellungsgeräte und Displays, insbesondere Elektronenstrahlröhren mit geringer Nachleuchtzeit (z.B.. unter 10ms) sowie LCD-Displays usw.
12 Interpolator; darunter fallen Einrichtungen, die aus einem Halbbild zwei zusammengehörende Halbbilder schaffen, indem sie die Zeilenzwischenräume eines Halbbildes mit interpolierter Bildinformation, vorzugsweise gewonnen aus der Bildinformation der beiden die Zeilenzwischenräume eingrenzenden Zeilen des betreffenden Halbbildes, füllen.
13 Videoteiler; teilt ein Videosignal von einem Pfad auf wenigstens zwei Pfade auf, so dass auf beiden Pfaden dieselben Signale anliegen.
14 Videoverstärker und Klemmvorrichtung; entsprechen den herkömmlichen Vorrichtungen bei der Videosignalverarbeitung u.U. kann auf diese z.B. bei der Variante E für Variante 3 auch verzichtet werden.
15 Halbbildspeicher; darunter fallen alle jene Speicher, somit gegebenenfalls auch Vollbildspeicher, die wenigstens ein Halbbild speichem können.
16 Vollbildspeicher mit Interpolation auf Framegrabber; dies sind integrierte Bauteile, die aus einem Halbbild durch Interpolation ein Vollbild kreieren und dieses in computerverarbeitbarer Form abgreifbar machen. Sie dienen auch zur Frequenzerhöhung der darstellbaren Bilder im Verhältnis zur Aufnahmefrequenz auf dem Videoaufnahmegerät.

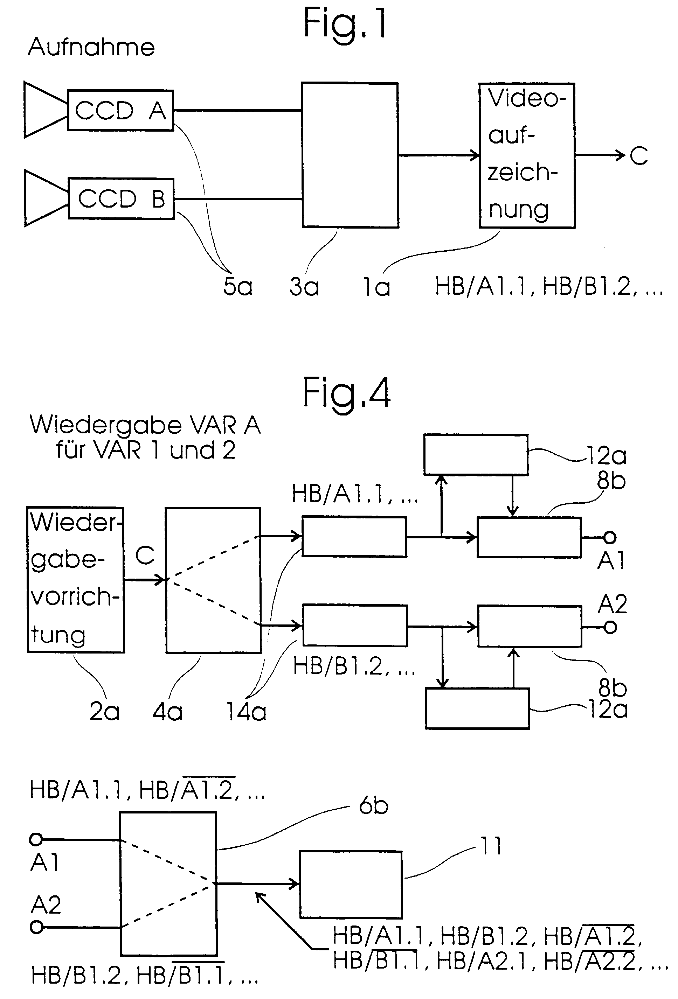

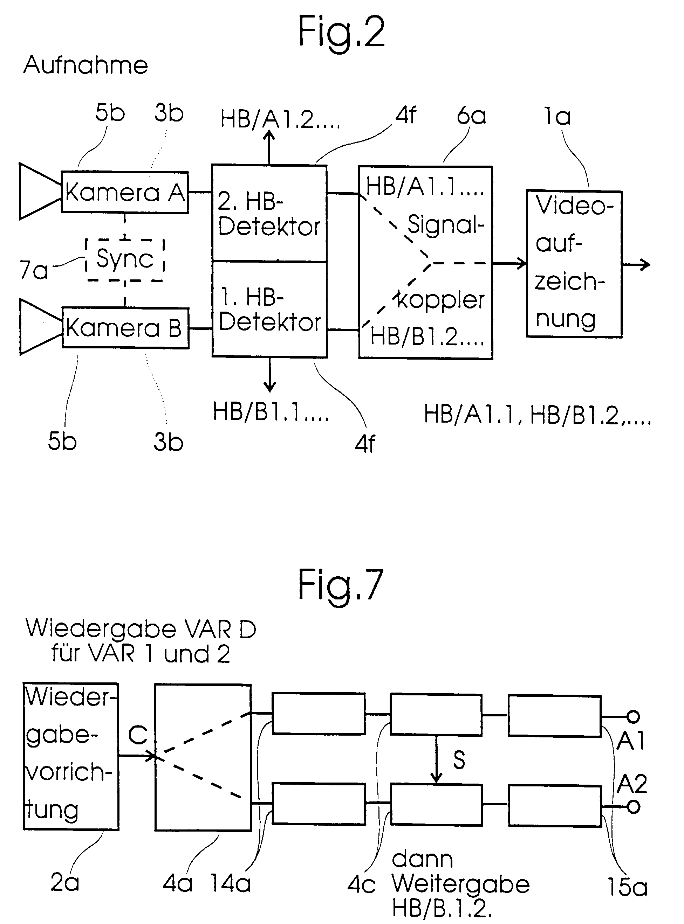

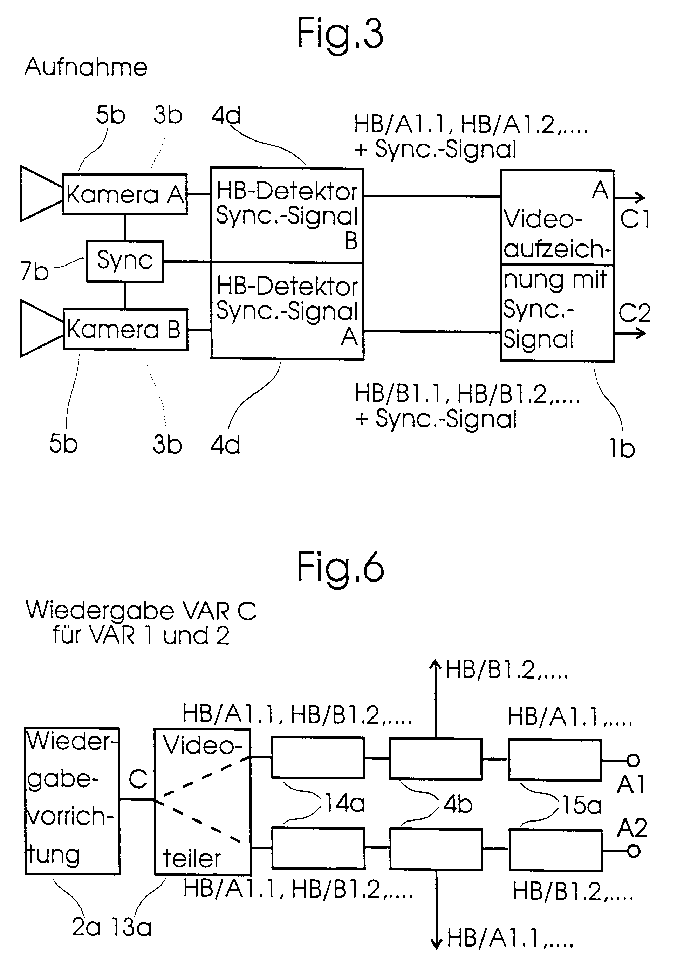

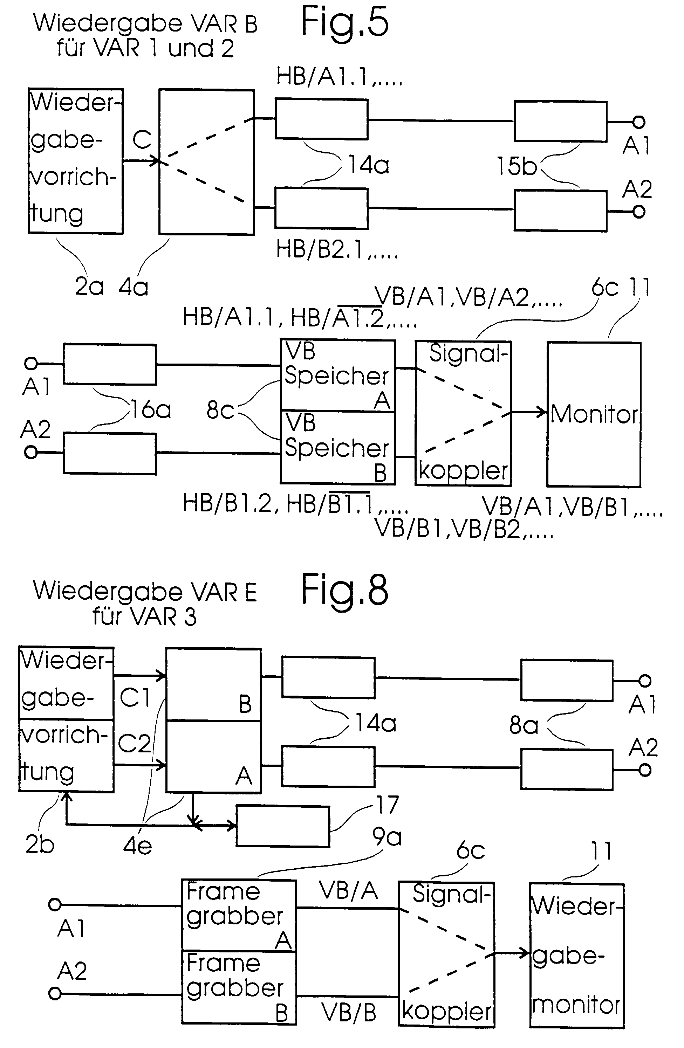

Die Vorrichtung zur Aufzeichnung und Wiedergabe von stereoskopischen Videobildern besteht zum einen aus einem Aufnahmeteil und zum anderen aus einem Wiedergabeteil. Verschiedene Ausführungsformen des Aufnahmeteils werden in den Fig. 1, Fig. 2 und Fig. 3 dargestellt.
Ausführungsbeispiele des Wiedergabeteils sind in den Fig. 4 bis Fig. 8 dargestellt. Die Ausführungsbeispiele der Aufnahmeteile einerseits und der Wiedergabeteile andererseits sind beliebig kombinierbar, wobei vorzugsweise das dritte Ausführungsbeispiel des Wiedergabeteils gemäß Fig. 8 dem dritten Ausführungsbeispiel des Aufnahmeteils gemäß Fig. 3 zugeordnet wird und die beiden anderen Ausführungsbeispiele des Wiedergabeteils gemäß Fig. 4 bis Fig. 7 jeweils dem ersten und zweiten Ausführungsbeispiel des Aufnahmeteils gemäß Fig. 1 bzw. Fig. 2 zugeordnet werden.

Nach einem ersten Ausführungsbeispiel des Aufnahmeteils gemäß Fig. 1 werden die dem rechten und linken Auge zugeordneten Teilbilder eines Stereobild-Paares durch zusammengehörende Kameras 5a aufgezeichnet. Die Ausgangssignale der beiden Kameras 5a weisen je gerade und ungerade Halbbilder HB/A1.1, HB/A1.2 bzw. HB/B1.1, HB/B1.2 auf. Die Ausgangsignale der Kameras 5a werden einer Kameraelektronik 3a zugeführt, in der die Halbbilder HB sequentiell umgeschaltet werden, wobei dem geraden Halbbild HB des ersten Kanals ein ungerades Halbbild HB des zweiten Kanals folgt.

Es werden somit von einem Kanal nur gerade Halbbilder HB und von dem anderen Kanal nur ungerade Halbbilder HB detektiert und zur Videoaufzeichnung einem Aufzeichnungsgerät 1a weitergeleitet. Nach einem zweiten Ausführungsbeispiel des Aufnahmeteils gemäß Fig. 2 sind dafür zwei Halbbild-Detektoren 4f vorgesehen, die jeweils gerade bzw. ungerade Halbbilder HB detektieren und einem Signal-Koppler 6a weiterleiten, der die ankommenden Halbbilder HB abwechselnd aufnimmt und dem Aufzeichnungsgerät 1a zuführt. Die Halbbild-Detektoren 4f werden mit der Halbbildfrequenz getaktet. Als Aufzeichnungsgerät 1a dient ein handelsüblicher Videorekorder.

Zur Wiedergabe wird dieser Videorekorder als Wiedergabegerät 2a verwendet, welches die gespeicherten Videodaten einem Videoteiler 13a zuführt. Der Videoteiler 13a spaltet die Signale auf zwei Kanäle auf. Vor der Weiterverarbeitung der den beiden Kanälen zugeteilten Signale werden diese Signale mittels eines Videoverstärkers und einer Videoklemmvorrichtung 14a gemäß einem bestehenden Standard normiert. Danach werden die geraden und ungeraden Halbbilder HB in den beiden Kanälen voneinander getrennt, so daß in einem der Kanäle gerade und im zweiten Kanal ungerade Halbbilder verarbeitet werden, siehe Fig. 6.

Zur Trennung werden Videohalbbilddetektoren 4b, z.B. Detektoren des Typ SM II VI.4 von der Fast Electronic GmbH, verwendet. Im Unterschied zu der Alternative gemäß Fig. 6 wird in der Alternative gemäß Fig. 7 dem zweiten Kanal ein Steuersignal s zugeführt. Damit läßt sich die Weitergabe der Halbbilder in dem anderen Halbbilddetektor 4c steuern, so daß die Synchronisation der Halbbilder HB unterschiedlicher Kanäle gewährleistet ist.

Nach dem Ausführungsbeispiel gemäß Fig. 4 werden die Halbbilder HB kanalweise jeweils einem Vollbild-Speicher 8b zugeleitet, der mit einem Interpolator 12a verbunden ist. In dem Interpolator 12a werden jeweils die fehlenden Halbbilder HB gebildet und den bestehenden Halbbildem HB hinzugefügt, so daß vollständige Teilbilder TB mit jeweils einem ungeraden und geraden Halbbild HB zur Verfügung stehen. Diese Teilbilder TB werden dann als Vollbilder einem Signal-Koppler 6b zugeführt, der diese Teilbilder TB sequentiell einem Wiedergabemonitor 11 zur Darstellung des Videobildes zuführt.

Nach einem weiteren Ausführungsbeispiel gemäß Fig. 5 werden die von der Videoklemmvorrichtung 14a kommenden Halbbilder HB kanalweise einem Halbbild-Speicher 15b zugeleitet und darauffolgend einem Vollbild-Speicher 16a. In dem Vollbild-Speicher 16a werden die Halbbilder HB unter Einsatz eines Framegrabbers in interpolierter Form als vollständige Teilbilder bzw. Vollbilder zwischengespeichert und dann jeweils einem Vollbild-Speicher 8c zugeleitet. Dem Vollbild-Speichem 8c ist ein nach dem Ausführungsbeispiel gemäß Fig. 4 ausgebildeter Signalkoppler 6c nachgeschaltet, der mit der 4-fachen Bildfrequenz betrieben wird und somit abwechselnd die rechten und linken Vollbilder mit einer Frequenz von 100Hz bzw. 120Hz dem Wiedergabegerät 11 zuführt.

Ein weiteres Ausführungsbeispiel des Aufnahmegerätes gemäß Fig. 3 unterscheidet sich von dem Ausführungsbeispiel gemäß Fig. 2 dadurch, daß zusätzlich zu den Halbbildern HB das Synchronisationssignal 7b, welches die Kameras 5b steuert, mitübertragen und auf dem Videoaufzeichnungsgerät 1b gespeichert werden. Ein Signal-Koppler ist nicht vorgesehen, da die Teilbilder des ersten und linken Kanals auf unterschiedlichen Speicherbereichen des Videoaufzeichnungsgeräts 1b aufgezeichnet werden. Zur Wiedergabe des stereoskopischen Videobildes werden die Halbbilder aus dem Wiedergabegerät 2b kanalweise ausgelesen und jeweils einem Halbbilddetektor 4e zugeführt. Je Kanal ist eine Videoklemmvorrichtung 14a und ein Vollbild-Speicher 8a sowie ein Framegrabber 9a nachgeschaltet, so daß wie bei den vorangehenden Ausführungsbeispielen die abgespeicherten Halbbilder durch interpolierte Halbbilder zu vollständigen Teilbildern komplettiert werden und abwechselnd von einem Signal-Koppler 6c zur Wiedergabe auf einem Wiedergabemonitor 11 übertragen werden. Dort sind sie im Vergleich zur Teilbildfrequenz je Kamera von beispielsweise 25Hz nun mit der 4-fachen Frequenz von beispielsweise 100Hz flimmerfrei erkennbar.

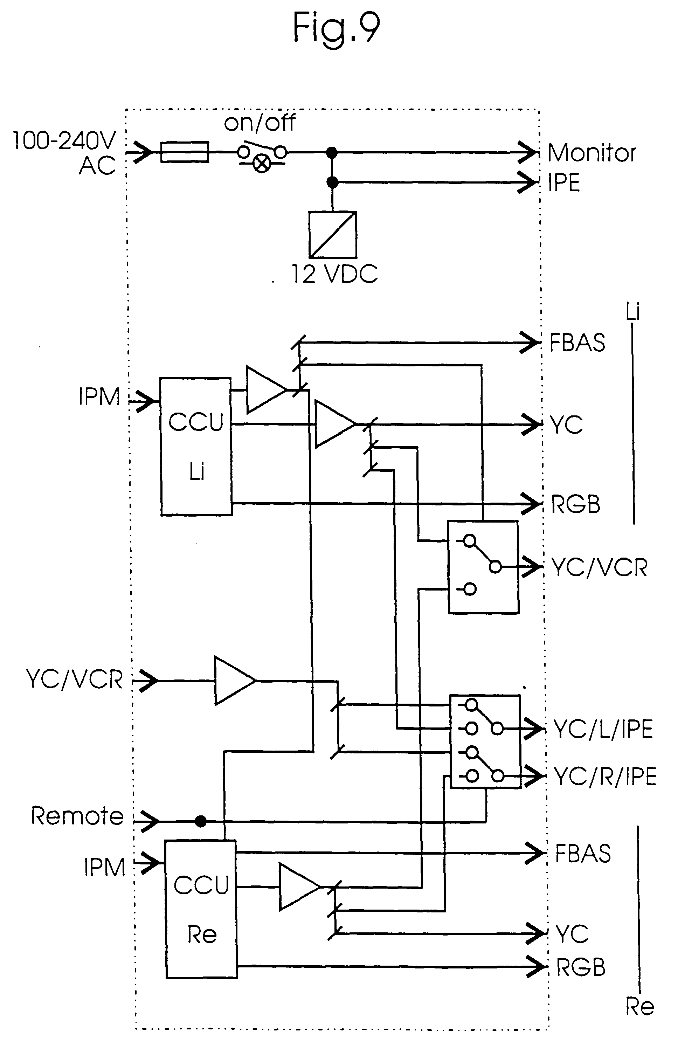

In Fig. 9 ist ein praktisches Beispiel eines Interfaces dargestellt. Das Interface umfaßt die kanalweise zugeordneten zwei Halbbilddetektoren und den daran anschließenden Signal-Koppler. Am Eingang IPM des Interfaces liegen die Ausgangssignale der rechten und linken Kamera an. Diese werden kanalweise in einer Kamera-Steuereinheit (camera control unit CCU) verarbeitet, wobei in der CCU/Li der linke Kanal und in der CCU/Re der rechte Kanal verarbeitet werden. Die Ausgangssignale dieser Kamera-Steuereinheiten CCU werden dann über jeweils eine Verstärkereinrichtung zum einen einer Life-Modus-Schaltung zugeführt, in der die Signale der rechten und linken Teilbilder umschaltbar sind und dann als Ausgangssignale YC/L/IPE und YC/R/IPE über einen linken bzw. rechten Kanal einer nicht dargestellten Signalverarbeitungseinheit zur Darstellung auf einem Wiedergabemonitor weitergeleitet werden. Zum anderen werden die Ausgangssignale einer Steuerschaltung zugeführt, in der sie zur Aufnahme auf einem Videorekorder aufbereitet und als Ausgangssignale YC/VCR einem Videorekorder zugeleitet werden. Optional werden an den Ausgängen des Interfaces weitere zur Darstellung eines Bildes übliche Signale FBAS, YC und RGB erzeugt.

Weiterhin kann an einen Eingang YCNCR des Interfaces ein Ausgangssignal eines Videorekorders gelegt werden, so daß nach der Zuführung desselben zur Life-Modus-Schaltung am Ausgang des Interfaces das auf dem Viedeorekorder aufgezeichnete Signal zur Darstellung auf dem Wiedergabemonitor zur Verfügung steht. Ein weiterer Remote-Eingang des Interfaces ermöglicht als Fembedienung die wahlweise Durchschaltung des auf dem Videorekorder aufgezeichneten Signals oder des von den Kameras erfaßten Signals. Im oberen Teil der Fig. 9 ist eine übliche Stromversorgungseinheit zu Bereitstellung der Stromversorgung des Interfaces dargestellt.

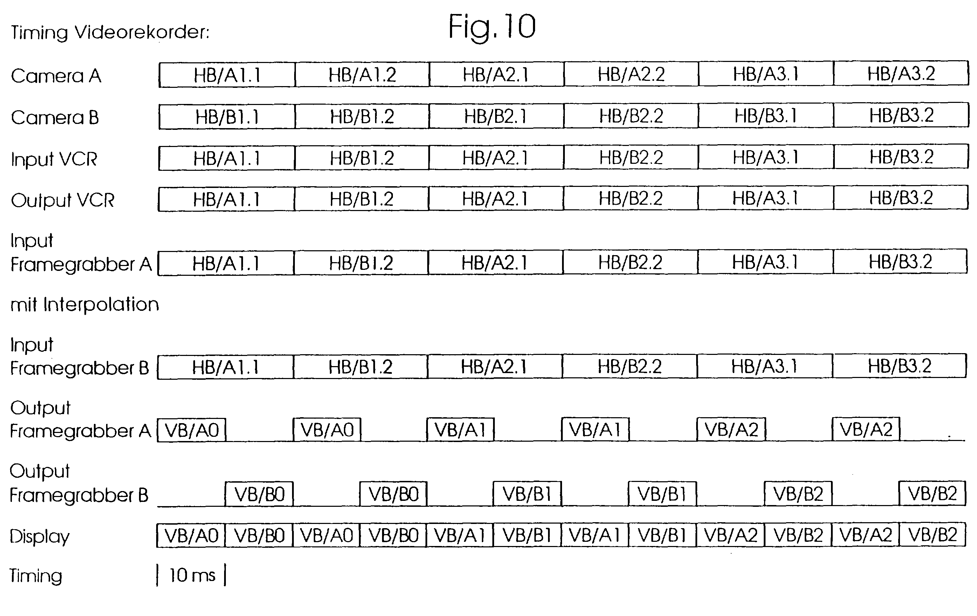

Die Wiedergabe der vollständigen Teilbilder mit 4-facher Frequenz ist in dem Zeitdiagramm gemäß Fig. 10 veranschaulicht. Jede Kamera erfaßt die Teilbilder durch aufeinanderfolgende gerade und ungerade Halbbilder HB. Die Bildfrequenz der Halbbilder beträgt beispielsweise 50 Hz, während die Bildfrequenz der Teilbilder 25 Hz beträgt. Das Aufnahmegerät VCR zeichnet die Halbbilder auf, wobei von einem ersten Kanal die ungeraden Halbbilder und von dem zweiten Kanal die geraden Halbbilder abwechselnd abgespeichert sind, siehe Input VCR.

Im weiteren Verlauf wird durch Interpolation den gespeicherten Halbbildern HB kanalweise ein weiteres Halbbild HB hinzugefügt, wobei die kanalweise komplettierten Bilder nun als Vollbilder im Abstand von beispielsweise 10ms an den Wiedergabemonitor zur Wiedergabe des Videobildes weitergeleitet werden. Durch die entsprechend höhere Auslesefrequenz beispielsweise im Framegrabber bzw. im Signal-Koppler wird die Bildfrequenz der Teilbilder auf 100 Hz erhöht. Bei dieser Frequenz liegen nun die Teilbilder als Vollbilder vor, wobei abwechselnd das Vollbild des einen Kanals und dann das Vollbild des anderen Kanals auf dem Wiedergabemonitor dargestellt wird.

## Patentansprüche

1. Verfahren zur Aufzeichnung und Wiedergabe von stereoskopischen Videobildem beobachteter Szenen, welche Videobilder durch zwei zusammengehörende Bilderfassungseinrichtungen (5a, 5b) so aufgebaut sind, dass sie aus
wenigstens einem rechten und einem linken Teilbild für einen rechten und linken Bildkanal bestehen,
welche Teilbilder jeweils aufgebaut sind aus
wenigstens einem geraden oder ungeraden Halbbild (HB)
oder
aus je wenigstens einem zusammengehörenden Paar (VB)
eines geraden und
eines ungeraden Halbbildes (HB),
dadurch gekennzeichnet, daß bei der Aufzeichnung dem Aufnahmegerät (1a, 1b) und/oder dem Wiedergabegerät (2a, 2b) altemierend oder gleichzeitig
jeweils zu einer Szene zusammengehörende Halbbilder (HB) aus den zwei Bilderfassungseinrichtungen (5a, 5b)
oder
jeweils zu einer Szene zusammengehörenden zwei Paaren (VB) von Halbbildern aus den zwei Bilderfassungseinrichtungen (5a, 5b) zugeführt werden und wobei wenigstens bei der Wiedergabe der stereoskopischen Videobilder wenigstens eines der Halbbilder (HB) oder eines der Paare (VB) von Halbbildern detektiert wird, so dass eine Zuordnung der Halbbilder (HB) oder Paare (VB) von Halbbildem zum zugehörigen linken oder rechten Bildkanal möglich ist, um anschliessend alle zum linken Kanal zugehörigen Bilder (HB,VB) nur in diesem und alle zum rechten Kanal zugehörigen Bilder (HB,VB) nur im rechten Kanal weiterzuverarbeiten und erst nach getrennter Weiterverarbeitung über einen Video-Signal-Koppler mit solcher Frequenz alternierend zusammen zu führen, dass bei Wiedergabe des zusammengeführten Signales auf einem Monitor für den Betrachter kein Flimmern wahmehmbar ist.

2. Verfahren nach Anspruch 1, dadurch gekennzeichnet, dass die linken und rechten Teilbilder von dem jeweils zugeordneten linken bzw. rechten Bilderfassungsgerät (5a), insbesondere von einem linken bzw. rechten CCD (5a) erfasst werden, wobei beide CCD's (5a) von nur einer gemeinsamen Kameraelektronik (3a) so ausgelesen werden, dass alternierend von dem einen CCD (5a) nur ein gerades Halbbild (HB) und von dem anderen CCD (5a) nur ein ungerades Halbbild (HB) - vorzugsweise im Halbbildtakt geschaltet - erfasst wird und an den Ausgang der Kameraelektronik (3a) gelegt wird, so dass dort ein einziges Videosignal, bestehend aus einem rechten und einem linken Halbbild (HB), dem Aufnahmegerät (1a) und/oder dem Wiedergabegerät (2a) zugeführt bzw. von diesem aufgezeichnet wird.

3. Verfahren nach Anspruch 1, dadurch gekennzeichnet, dass linke und rechte Teilbilder, bestehend aus jeweils einem Paar (VB) von jeweils zwei zusammengehörenden Halbbildern (HB), von jeweils einem linken und einem rechten Bilderfassungsgerät, insbesondere von einer rechten und einer linken herkömmlichen Videokamera (5b) mit jeweils einer eigenen Kameraelektronik (3b) erfasst werden, wobei der Erfassungsvorgang bei beiden Kameras (5b) vorzugsweise getaktet bzw. synchronisiert ist, worauf nach jedem Kameraausgang ein herkömmliches Videosignal zur Verfügung steht, aus dem jeweils wenigstens eines der beiden Halbbilder (HB) des jeweiligen Paares (VB) detektiert wird und worauf nach jeder solchen Detektion eines der beiden Halbbilder (HB) ausgetastet wird, so dass danach im einen Kanal ein gerades und im anderen Kanal ein ungerades Halbbild (HB) zur Weiterverarbeitung verbleibt, worauf die Signale dieser Halbbilder (HB) - über einen Video- Signal-Koppler (6a) alternierend dem Aufnahmegerät (1a) und/oder dem Wiedergabegerät (2a) zugeführt bzw. von diesem aufgezeichnet werden.

4. Verfahren nach Anspruch 1, dadurch gekennzeichnet, dass linke und rechte Teilbilder, bestehend aus jeweils Paaren (VB) von jeweils zwei Halbbildern (HB), von jeweils einem linken und einem rechten Bilderfassungsgerät, insbesondere von einer herkömmlichen rechten und einer herkömmlichen linken Videokamera (5b) mit jeweils angeschlossener Kameraelektronik (3b) erfasst werden, wobei der Erfassungsvorgang bei beiden Kameras (5b) vorzugsweise getaktet bzw. synchronisiert ist, worauf an jedem Kameraausgang ein herkömmliches Videosignal zur Verfügung steht, aus dem jeweils wenigstens eines der beiden Halbbilder (HB) des jeweiligen Paares (VB) detektiert wird und mit einem zusätzlichen Synchronisierungssignal aus der Kamerasynchronisation (7b) versehen wird, worauf alle Halbbilder (HB) bzw. Paare (VB) von Halbbildern (HB) dem Aufnahmegerät (1b) und/oder dem Wiedergabegerät (1b,2b) zugeführt bzw. von diesem in zwei unabhängigen Kanälen aufgezeichnet werden.

5. Verfahren nach Anspruch 4, dadurch gekennzeichnet, dass an den Ausgängen (C1,C2) der beiden Kanäle der Wiedergabevorrichtung (2b) die Halbbilder (HB) mit den zugeordneten Synchronisierungssignalen detektiert werden und das Synchronisierungssignal vom Signal der betreffenden Halbbilder (HB) abgenommen und einer Synchronisationssteuerung für die Wiedergabevorrichtung (2b) zugeführt werden, die für den zeitlichen Gleichlauf der beiden Kanäle sorgt, und dass alle Halbbilder (HB) bzw. Paare (VB) von Halbbildern (HB) jeden Kanales einem eigenen Vollbildspeicher (8a) zugeführt werden, aus dem sie kanalweise zur Weiterverarbeitung mit gewünschter Abfragefrequenz, vorzugsweise mit vierfacher horizontaler Ablenkungsfrequenz, zur Verfügung stehen.

6. Verfahren nach Anspruch 5, dadurch gekennzeichnet, dass die Teilbilder als Vollbilder aus den Vollbildspeichern (8a) - vorzugsweise mittels Framegrabber (9a) - progressiv (zeilenweise) ausgelesen und einem Video-Signal-Koppler (6c), z.B. einer Graphikkarte eines Computers bzw. Wiedergabemonitors, zugeführt werden, aus dem die Teilbilder des einen Kanales in geeigneter Frequenz, vorzugsweiser vierfacher horizontaler Ablenkungsfrequenz, abwechselnd mit den Teilbildem des anderen Kanales einem bzw. dem Wiedergabemonitor (11) zugeführt werden.

7. Verfahren nach Anspruch 2 oder 3, dadurch gekennzeichnet, dass das Videosignal am Ausgang der Wiedergabevorrichtung (2a) einem einzigen Halbbildetektor (4a) mit - vorzugsweise - integriertem Videoteiler zugeführt wird, in welch ersterem das erste Halbbild (HB/A1.1....) des Videosignals detektiert und über den Videoteiler dem ersten Kanal zugeführt wird, während das zweite Halbbild (HB/B 1.2....) dem zweiten Kanal zugeführt wird, so dass in jedem Kanal ein Halbbild (HB) seines zugeordneten Teil bildes verarbeitbar ist, wobei die Signale beider Halbbilder (HB/A1.1.... und HB/B1.2....) je einem Interpolator (12a) und vorzugsweise gleichzeitig einem Vollbildspeicher (8a) zugeführt werden, wobei jeder Interpolator (12a) die jeweils fehlenden Zeilen zwischen dem Halbbild seines Kanales durch generierte Zeilen zu einem zweiten Halbbild (HB) zusammensetzt und dieses weiter vorzugsweise dem jeweiligen Vollbildspeicher (8a) zuführt, so dass im Vollbildspeicher (8a) ein vollständiges Teilbild bzw. ein Paar (VB) von zwei zusammengehörenden Halbbildern zur Weiterverarbeitung abgreifbar ist.

8. Verfahren nach Anspruch 7, dadurch gekennzeichnet, dass die Teilbilder als Vollbilder aus den Vollbildspeichern (8b) - gegebenenfalls mittels Framegrabber (9a) - progressiv (zeilenweise)
oder
als zeitlich aufeinanderfolgende gerade und ungerade Halbbilder (HB) ausgelesen und einem Video-Signal-Koppler (6b), z.B. einer Graphikkarte eines Computers bzw. Wiedergabemonitors, zugeführt werden, von wo aus die Vollbilder (VB) oder alle Halbbilder (HB) in geeigneter Frequenz, vorzugsweiser vierfacher horizontaler Ablenkungsfrequenz, in zeitlicher Abfolge einem Wiedergabemonitor (11) zugeführt werden.

9. Verfahren nach Anspruch 2 oder 3, dadurch gekennzeichnet, dass das Videosignal am Ausgang der Wiedergabevorrichtung (2a) einem Videoteiler (13a) zugeführt wird, in dem alle Halbbilder (HB) auf einen ersten und einen zweiten Bildverarbeitungs-Kanalvorzugsweise mit je einer Verstärkungs- und Klemmvorrichtung (14a) - aufgeteilt werden, wobei dort weiters durch je einen Halbbildetektor (4b) eines der beiden Halbbilder (HB) detektiert und aus dem jeweiligen Verabeitungs-Kanal gelöscht wird, während das jeweils verbleibende Halbbild (HB/A1.1....,HB/B1.2....) je einem Halbbildspeicher (15a) zugeführt wird, aus dem die Halbbilder zur Weiterverarbeitung, gegebenenfalls zur Umwandlung und Darstellung in Vollbilder (VB), zur Verfügung stehen.

10. Verfahren nach Anspruch 2 oder 3, dadurch gekennzeichnet, dass das Videosignal am Ausgang der Wiedergabevorrichtung (2a) einem einzigen Halbbildetektor (4a) mit - vorzugsweise - integriertem Videoteiler zugeführt wird, in welch ersterem das erste Halbbild (HB/A1.1....) des Videosignals detektiert und über den Videoteiler dem ersten Kanal zugeführt wird, während das zweite Halbbild (HB/B 1.2....) dem zweiten Kanal zugeführt wird, so dass in jedem Kanal ein Halbbild (HB) seines zugeordneten Teilbildes verarbeitbar ist, wobei die Signale beider Halbbilder (HB/A1.1.... und HB/B1.2....) je einem Halbbildspeicher (15b) zugeführt werden, aus denen sie je einem Vollbildspeicher (16a) mit Interpolation - vorzugsweise auf einem Framegrabber - zugeführt werden, in denen aus jedem Halbbild (HB) eines Kanales durch Interpolation ein Vollbild (VB) erzeugt wird, wobei bei jedem Interpolationsvorgang die jeweils fehlenden Zeilen zwischen dem Halbbild seines Kanales durch generierte Zeilen zu einem zweiten Halbbild (HB) zusammensetzt und dieses mit dem jeweiligen ursprünglichen Halbbild (HB) zu einem vollständiges Teilbild bzw. zu einem ein Paar (VB) von zwei zusammengehörenden Halbbildern (HB) zur Weiterverarbeitung zusammensetzt, welche Teilbilder in jedem Kanal, vorzugsweise über je einen weiteren Vollbildspeicher (8c), einem gemeinsamen Video-Signal-Koppler (10c) zugeführt wird, der mit geeigneter Frequenz, vorzugsweiser vierfacher horizontaler Ablenkungsfrequenz, abwechselnd die.beiden Vollbilder der beiden Kanäle an den Monitor (11) weiterleitet.

11. Verfahren nach einem der vorhergehenden Ansprüche, dadurch gekennzeichnet, dass - im Falle von zwei Halbbilddetektoren (4c) in den beiden Kanälen - die Zuordnung eines der Halbbilder (HB) entweder in einem der beiden Kanäle detektiert wird und nach zeitlichem Ablauf des detektierten Halbbildes (HB) dem zweiten Kanal ein Steuersignal (s) zugeführt wird, oder die Zuordnung der Halbbilder in einem Kanal für die geraden und in dem zweiten Kanal für die ungeraden Halbbilder detektiert wird.

12. Verfahren nach einem der vorhergehenden Ansprüche, dadurch gekennzeichnet, dass zur Weiterverarbeitung der Videosignale in den beiden Kanälen jedes Halbbild (HB) in einem Halbbildspeicher (15b) gespeichert wird, und zur Ableitung eines Vollbildes bzw. eines Paares (VB) von zwei zusammengehörenden Halbbildern (HB) aus einem Halbbild (HB) die Zeilenanzahl des Halbbildes (HB) mittels eines Interpolationsverfahrens verdoppelt wird und die rechten und linken Teilbilder bzw. Vollbilder zeitlich nacheinander mit geeigneter, vorzugsweiser vierfacher horizontaler Ablenkungsfrequenz auf einem Bildschirm (11) dargestellt werden.

13. Vorrichtung zur Aufzeichnung und Wiedergabe von stereoskopischen Videobildern beobachteter Szenen mit zwei zusammengehörenden Bilderfassungseinrichtungen (5a,5b) zur Aufnahme von stereoskopischen Teilbildern (TB), gekennzeichnet durch
- einen Signal-Koppler (6a,6b) zur kanalweisen Umschaltung der von den Bilderfassungseinrichtungen (5a,5b) aufgenommenen rechten und linken Teilbilder (TB), wobei von einem ersten Kanal ein erstes ungerades Halbbild (HB/A1.1...) und von einem zweiten Kanal ein zweites gerades Halbbild (HB/B1.2...) umgeschaltet wird,
- ein Aufnahmegerät (1a,1b) zur Aufnahme der abwechselnd umgeschalteten Teilbilder (TB),
- ein Wiedergabegerät (2a,2b) und einem diesem nachgeschalteten Videoteiler (13a), der das erste Halbbild (HB) detektiert und einem ersten Kanal zuführt und der das zweite Halbbild (HB) detektiert und einem zweiten Kanal zuführt, so daß die Halbbilder (HB) kanalweise weiterverarbeitbar sind.

14. Vorrichtung nach Anspruch 13, gekennzeichnet durch einen Interpolator (12a) und einen Vollbild-Speicher (8a) je Kanal, wobei der Interpolator (12a) ein Halbbild (HB) generiert, das dem Vollbildspeicher (8a) zugeführt und mit dem bereits vorhandenen Halbbild (HB) zu einem vollständigen Teilbild (TB) zusammengesetzt wird.

15. Vorrichtung nach Anspruch 13 oder 14, dadurch gekennzeichnet, daß ein Framegrabber (9a) vorgesehen ist zum Lesen der Teilbilder des ersten und zweiten Kanals als Vollbilder mit 4-facher Bildfrequenz und mit einem Wiedergabemonitor (11) zur Darstellung der Videobilder.

16. Vorrichtung nach Anspruch 13, 14 oder 15, dadurch gekennzeichnet, daß der mit dem Ausgang des Wiedergabegeräts (2a) verbundene Videoteiler (13a) für das Aufteilen der Halbbilder (HB) auf einen ersten und eine zweiten Kanal ausgebildet ist und daß je einem Kanal ein Halbbild-Speicher (15a) zugeordnet ist zur Zwischenspeicherung und Umwandlung der Halbbilder (HB) in die Vollbilder.

## Claims

1. Method for the recording and reproduction of stereoscopic video images of observed scenes, which video images are so built up by two image-detection equipments (5a, 5b), which belong together, that they consist of at least a right-hand and a left-hand partial image for a right-hand and a left-hand image channel, which partial images are each built up of at least one even or uneven half image (HB) or of at least a respective pair (VB), which belong together, of an even and an uneven half image (HB), characterised thereby, that half images (HB), which each belong to one scene, from the two image-detection equipments (5a, 5b) or two pairs (VB) of half images, which each belong to one scene, from the two image-detection equipments (5a, 5b) are supplied in alternation or simultaneously to the recording device (1a, 1b) and/or the reproducing device (2a, 2b) during the recording, wherein at least one of the half images (HB) or one of the pairs (VB) of half images is detected at least during the reproduction of the stereoscopic video images so that an allocation of the half images (HB) or pairs (VB) of half images to the associated left-hand or right-hand image channel is possible in order subsequently to process all images (HB, VB) belonging to the left-hand channel further only in this or to process all images (HB, VB) belonging to the right-hand channel further only in the right-hand channel and to bring them together in alternation at such a frequency by way of a video signal coupler only after separate further processing that no flicker is perceivable for the observer on a monitor on reproduction of the united signal.

2. Method according to claim 1, characterised thereby, that the left-hand and right-hand images are detected by the respectively associated left-hand or right-hand image detection device (5a), in particular by a left-hand or right-hand charge-coupled device (5a), wherein both charge-coupled devices (5a) are so read out by only one common electronic camera system (3a) that only an even half image (HB) from the one charge-coupled device (5a) and only an uneven half image from the other charge-coupled device (5a) are detected in alternation, preferably switched at the half image rate, and applied to the output of the electronic camera system (3a) so that a single video signal, consisting of a right-hand and a left-hand image (HB), is there fed to the recording device (1a) and/or the reproducing device (2a) or is recorded by this.

3. Method according to claim 1, characterised thereby, that left-hand and right-hand partial images consisting each time of a pair (VB) of the two respective half images (HB), which belong together, are detected by a respective one of a left-hand and right-hand image-detection device, in particular by a right-hand and a left-hand conventional video camera (5b), each with an individual electronic camera system (3b), wherein the detection process of both the cameras (5b) is preferably keyed or synchronised, whereupon a conventional video signal is available behind each camera output, from which signal at least one of both the half images (HB) of the respective pair (VB) is detected each time and whereupon one of both the half images (HB) is blanked out after each such detection so that an even half image (HB) in one channel and an uneven half image (HB) in the other channel remain thereafter for further processing, whereupon the signals of these half images (HB) are fed by way of a video signal coupler (6a) in alternation to the recording device (1a) and/or the reproducing device (2a) or are recorded by this.

4. Method according to claim 1, characterised thereby, that left-hand and right-hand partial images consisting each time of pairs (VB) of the two respective half images (HB), are detected by a respective one of a left-hand and right-hand image-detection device, in particular by a right-hand and a left-hand conventional video camera (5b), each with a respectively connected electronic camera system (3b), wherein the detection process of both the cameras (5b) is preferably keyed or synchronised, whereupon a conventional video signal is available at each camera output, from which signal at least one of both the half images (HB) of the respective pair (VB) is detected each time and provided with an additional synchronisation signal from the camera synchronisation (7b), whereupon all half images (HB) or pairs (VB) of half images are fed to the recording device (1b) and/or the reproducing device (1b, 2b) or are recorded by these in two independent channels.

5. Method according to claim 4, characterised thereby, that the half images (HB) with the associated synchronising signals are detected at the outputs (C1, C2) of both the channels of the reproducing device (2b) and the synchronising signal is taken off from the signal of the half images (HB) concerned and fed to a synchronising control for the reproducing device (2b), which takes care of the synchronisation of both the channels, and that all half images (HB) or pairs (VB) of half images of each channel are fed to an individual whole image storage device (8a), from which they are available channel by channel for further processing at desired interrogation frequency, preferably at four times the horizontal deflection frequency.

6. Method according to claim 5, characterised thereby, that the partial images are read out progressively (line by line) from the whole image storage devices (8a), preferably by means of frame grabber (9a), and fed to a video signal coupler (6c), for example a graphics card of a computer or reproduction monitor, from which the partial images of the one channel are fed in alternation, at a suitable frequency, preferably at four times the horizontal deflection frequency, with the partial images of the other channel to a or the reproduction monitor (11).

7. Method according to claim 2 or 3, characterised thereby, that the video signal at the output of the reproducing device (2a) is fed to a single half image detector (4a) with preferably integrated video divider, in the first of which the first half image (HB/A1.1...) of the video signal is detected and fed to the first channel by way of the video divider, whilst the second half image (HB/B1.2...) is fed to the second channel, so that in each channel a half image (HB) of its associated partial image is processable, wherein the signals of both the half images (HB/A1.1... and HB/B1.2...) are each fed to a respective interpolator (12a) and preferably to a whole image storage device (8a) at the same time, wherein each interpolator (12a) assembles the respectively absent lines between the half image of its channel by generated lines into a second half image (HB) and feeds this further preferably to the respective whole image storage device (8a) so that a complete partial image or a pair (VB) of two half images, which belong together, is derivable in the whole image storage device (8a) for further processing.

8. Method according to claim 7, characterised thereby, that the partial images are read out progressively (line by line) from the whole image storage devices (8b), in a given case by means of frame grabber (9a), or as sequentially following even and uneven half images and fed to a video signal coupler (6b), for example a graphics card of a computer or reproduction monitor, from where the whole images (VB) or all half images (HB) are fed at a suitable frequency, preferably at four times the horizontal deflection frequency, in time sequence to a reproduction monitor (11).

9. Method according to claim 2 or 3, characterised thereby, that the video signal at the output of the reproducing device (2a) is fed to a video divider (13a), in which all half images (HB) are divided over a first and a second image-processing channel each preferably with a respective amplifying and clamping device (14a), wherein one of both the half images (HB) is furthermore detected there by a respective half image detector (4b) and erased from the respective processing channel, whilst the respectively remaining half image (HB/A1.1..., HB/B1.2...) is fed to a respective half image storage device (15a), from which the half images are available for further processing, in a given case for conversion and representation in whole images (VB).

10. Method according to claim 2 or 3, characterised thereby, that the video signal at the output of the reproducing device (2a) is fed to a single half image detector (4a) with preferably integrated video divider, in the first of which the first half image (HB/A1.1...) of the video signal is detected and fed to the first channel by way of the video divider, whilst the second half image (HB/B1.2...) is fed to the second channel, so that in each channel a half image (HB) of its associated partial image is processable, wherein the signals of both the half images (HB/A1.1... and HB/B1.2...) are each fed to a respective half image storage device (15b), from which they are fed to a respective whole image storage device (16a) with interpolation, preferably on a frame grabber, in which a whole image (VB) is produced by interpolation from each half image (HB) of a channel, wherein the respectively absent lines between the half image of its channel are assembled by generated lines into a second half image (HB) during each interpolation process and this is assembled with the respectively original half image (HB) into a complete partial image or a pair (VB) of two half images, which belong together, for further processing, which partial images are in each channel fed, preferably by way of a respective further whole image storage device (8c), to a common video signal coupler (10c), which passes both the whole images of both the channels on in alternation at a suitable frequency, preferably at four times the horizontal deflection frequency, to the monitor (11).

11. Method according to one of the preceding claims, characterised thereby, that in the case of two half image detectors (4c) in both the channels, the association of one of the half images (HB) is either detected in one of both the channels and a control signal (s) is fed to the second channel after the time sequence of the detected half image (HB) or the association of the half images is detected in one channel for the even half images and in the second channel for the uneven half images.

12. Method according to one of the preceding claims, characterised thereby, that each half image (HB) is stored in a half image storage device (15b) for the further processing of the video signals in both the channels and the number of lines of the half image (HB) is doubled by means of an interpolation process for the derivation of a whole image or a pair (VB) of the half images (HB), which belong together, from one half image (HB) and the right-hand and left-hand partial images or whole images are represented on a picture screen (11) one after the other in time at a suitable frequency, preferably at four times the horizontal deflection frequency.

13. Device for the recording and reproduction of stereoscopic video images of observed scenes, with two image-detection equipments (5a, 5b), which belong together, for the recording of stereoscopic partial images (TB), characterised by
- a signal coupler (6a, 6b) for the switching-over, channel by channel, of the right-hand and left-hand partial images recorded by the two image-detection equipments (5a, 5b), wherein a first uneven half image (HB/A1.1...) is switched over from a first channel and a second even half image (HB/B1.2...) is switched over from a second channel,
- a recording device (1a, 1b) for the recording of the partial images (TB) switched over in alternation,
- a reproducing device (2a, 2b) and a video divider (13a), which is connected downstream thereof and which detects the first half image (HB) and feeds it to a first channel and detects the second half image (HB) and feeds it to a second channel, so that the half images (HB) are processable further channel by channel.

14. Device according to claim 13, characterised by an interpolator (12a) and a whole image storage device (8a) for each channel, wherein the interpolator (12a) generates a half image (HB), which is fed to the whole image storage device (8a) and assembled with the already present half image (HB) into a complete partial image (TB).

15. Device according to claim 13 or 14, characterised thereby, that a frame grabber (9a) is provided for the reading of the partial images of the first and the second channel as whole images at four times the frame frequency and with a reproduction monitor (11) for showing the video images.

16. Device according to claim 13, 14 or 15, characterised thereby that the video divider (13a) connected with the output of the reproducing device (2a) is constructed for dividing the half images (HB) up over a first and a second channel and that a half image storage device (15a) is associated with each channel for intermediate storage and conversion of the half images (HB) into the whole images.

## Revendications

1. Procédé d'enregistrement et de restitution d'images vidéo stéréoscopiques de scènes observées, lesquelles images vidéo sont constituées par deux systèmes allant ensemble d'acquisition de l'image (5a, 5b) de manière qu'elles se composent
d'au moins une image partielle droite et une gauche pour un canal de l'image droit et un gauche,
lesquelles images partielles sont à chaque fois constituées de
au moins une demi image (HB) paire ou une impaire
ou
d'au moins une paire allant ensemble (VB) d'une demi-image paire et d'une impaire (HB),
caractérisé en ce, que lors de l'enregistrement sont conduits, à l'appareil d'enregistrement (1a, 1b) et/ou à l'appareil de restitution (2a, 2b), de façon alternée ou simultanée, à chaque fois les demi-images allant ensemble (HB) d'une scène provenant des deux systèmes d'acquisition de l'image (5a, 5b)
ou
à chaque fois les deux paires (VB) allant ensemble d'une scène de demi-images sont conduites des deux systèmes d'acquisition de l'image (5a, 5b) et où au moins lors de la restitution des images vidéo stéréoscopiques, au moins l'une des demi-images (HB) ou l'une des paires (VB) de demi-images est détectée, de façon qu'une affectation des demi-images (HB) ou paires (VB) de demi-images au canal droit ou gauche correspondant soit possible pour ensuite plus amplement traiter toutes les images (HB,VB) correspondant au canal gauche uniquement dans celui-ci et toutes les images (HB, VB) correspondant au canal droit uniquement dans le canal droit et après plus ample traitement séparé, les réunir par un coupleur de signaux vidéo, de façon alternée, à une fréquence telle qu'à la restitution du signal réuni sur un moniteur il n'y ait aucun scintillement perceptible à l'observateur.

2. Procédé selon la revendication 1, caractérisé en ce que les images partielles gauche et droite sont acquises par l'appareil d'acquisition de l'image gauche ou respectivement droit (5a) qui leur est affecté, en particulier par un CCD gauche ou respectivement droit (5a) et les deux CCD (5a) ne sont lus que par une électronique de caméra commune (3a), de façon que ne soit acquise de manière alternée qu'une demi-image paire (HB) d'un CCD(5a) et de l'autre CCD(5a), seulement une demi-image impaire (HB), avantageusement à la fréquence de demi-image, et se trouve à la sortie de l'électronique de caméra (3a) de façon que là, un seul signal vidéo se composant d'une demi-image droite et d'une gauche (HB), soit conduit à l'appareil d'enregistrement (la) et/ou à l'appareil de restitution (2a) ou respectivement en soit enregistré.

3. Procédé selon la revendication 1, caractérisé en ce que les images partielles gauche et droite, se composant à chaque fois d'une paire (VB) de deux demi-images (HB) allant ensemble, à chaque fois, d'un appareil d'acquisition de l'image gauche et droite, en particulier d'une caméra vidéo traditionnelle (5b) droite et d'une gauche, sont acquises à chaque fois avec leur propre électronique de caméra (3b) et ainsi le processus d'acquisition des deux caméras est avantageusement synchronisé ce par quoi, après chaque sortie de caméra, on dispose d'un signal vidéo traditionnel à partir duquel est détectée à chaque fois au moins l'une des deux demi-images (HB) de chaque paire (VB) et ensuite après chacune de ces détections, l'une des deux demi-images (HB) est effacée de façon qu'il ne reste dans un canal qu'une demi-image paire et dans l'autre canal une demi-image impaire (HB) pour un plus ample traitement, et les signaux de ces demi-images (HB) sont conduits par un coupleur de signaux vidéo (6a) de façon alternée à l'appareil d'enregistrement (la) et/ou à l'appareil de restitution (2a) ou respectivement en sont enregistrés.

4. Procédé selon la revendication 1, caractérisé en ce que les images partielles gauche et droite, se composant à chaque fois de paires (VB) à chaque fois de deux demi-images (HB), sont acquises par un appareil d'acquisition de l'image gauche et un droit, en particulier par une caméra vidéo traditionnelle droite et une traditionnelle gauche (5b) avec à chaque fois électronique de caméra (3b) raccordée, et le processus d'acquisition est synchronisé avantageusement pour les deux caméras (5b), ce par quoi on dispose, à la sortie de chaque caméra, d'un signal vidéo traditionnel à partir duquel à chaque fois au moins l'une des deux demi-images (HB) de chaque paire (VB) est détectée et est pourvue d'un signal supplémentaire de synchronisation provenant de la synchronisation de la caméra (7b) et toutes les demi-images (HB) ou respectivement paires (VB) de demi-images (HB) sont conduites à l'appareil d'enregistrement (1b) et/ou l'appareil de restitution (1b, 2b) ou sont enregistrées par celui-ci dans deux canaux indépendants.

5. Procédé selon la revendication 4, caractérisé en ce qu'aux sorties (C1, C2) des deux canaux du dispositif de restitution (2b), les demi-images (HB) sont détectées avec les signaux affectés de synchronisation et le signal de synchronisation est prélevé du signal de la demi-image (HB) correspondante et est conduit à une commande de synchronisation pour le dispositif de restitution (2b), qui prévoit la marche identique dans le temps des deux canaux et en ce que toutes les demi-images (HB) ou respectivement paires (VB) de demi images (HB) de chaque canal sont conduites à leur propre mémoire d'images complètes (8a) d'où elles sont disponibles, par canal, pour un plus ample traitement avec une fréquence souhaitée d'interrogation, avantageusement avec une fréquence de déviation horizontale quadruple.

6. Procédé selon la revendication 5, caractérisé en ce que les images partielles sont lues, en tant qu'images complètes de la mémoire d'images complète (8a), avantageusement au moyen d'un extracteur de trames (9a) progressivement (par ligne) et sont conduites à un coupleur de signaux vidéo (6c) par exemple à une carte graphique d'un ordinateur ou respectivement d'un moniteur de restitution à partir duquel les images partielles d'un canal à la fréquence appropriée, avantageusement quatre fois la fréquence de déviation horizontale en alternance avec les images partielles de l'autre canal sont conduites à un moniteur de restitution ou, respectivement, au moniteur de restitution (11).

7. Procédé selon la revendication 2 ou 3, caractérisé en ce que le signal vidéo à la sortie du dispositif de restitution (2a) est conduit à un détecteur unique de demi-images (4a) avec, avantageusement, répartiteur vidéo intégré, dans lequel d'abord, la première demi-image (HB/A1.1....) du signal vidéo est détectée et est conduite, par le répartiteur vidéo, au premier canal, alors que la seconde demi-image (HB/B 1.2....) est conduite au second canal, de façon que dans chaque canal une demi-image (HB) de son image partielle affectée soit traitable, où les signaux des deux demi-images (HB/A1.1....et HB/B1.2....) sont conduits à chaque fois à un interpolateur (12a) et avantageusement simultanément à une mémoire d'images complètes (8a), où chaque interpolateur (12a) recompose les lignes manqant à chaque fois entre la demi-image de son canal par des lignes générées en une seconde demi-image (HB) et conduit celle-ci plus loin, avantageusement à chaque mémoire d'images complètes (8a) de manière que dans la mémoire d'images complètes (8a) il y ait une image partielle complète ou, respectivement, une paire (VB) de demi-images allant ensemble pour un plus ample traitement.

8. Procédé selon la revendication 7, caractérisé en ce que les images partielles sont lues en tant qu'images complètes des mémoires d'images complètes (8b) le cas échéant au moyen de l'extracteur de trame (9a), progressivement (par ligne) ou en tant que demi-images paires et impaires (HB) se suivant dans le temps et sont conduites à un coupleur de signaux vidéo (6b), par exemple une carte graphique d'un ordinateur ou respectivement d'un moniteur de restitution, d'où les images complètes (VB) ou toutes les demi images (HB) sont conduites, à la fréquence appropriée, avantageusement quatre fois la fréquence de déviation horizontale, en série dans le temps, à un moniteur de restitution (11).

9. Procédé selon la revendication 2 ou 3, caractérisé en ce que le signal vidéo à la sortie du dispositif de restitution (2a) est conduit à un répartiteur vidéo (13a) dans lequel toutes les demi-images (HB) sont réparties sur un premier et un second canal de traitement d'images, avantageusement avec un dispositif d'amplification et de blocage (14a), et là, de plus, l'une des deux demi-images (HB) est détectée par un détecteur (4b) de demi-image et est supprimée de chaque canal de traitement tandis que chaque demi-image restante (HB/A1.1....,HB/B1.2....) est conduite à une mémoire de demi-images (15a) d'où les demi-images sont disponibles pour un plus ample traitement, le cas échéant pour une transformation et une représentation en images complètes (VB).

10. Procédé selon la revendication 2 ou 3, caractérisé en ce que le signal vidéo à la sortie du dispositif de restitution (2a) est conduit à un seul détecteur de demi image (4a), avec avantageusement répartiteur vidéo intégré, où d'abord la première demi-image (HB/A1.1....) du signal vidéo est détectée et est conduite par le répartiteur vidéo, au premier canal tandis que la seconde demi-image (HB/B1.2....) est conduite au second canal, de manière que dans chaque canal, une demi-image (HB) de son image partielle affectée puisse être traitée, et les signaux des deux demi-images (HB/A1.1.... et HB/B1.2....) sont conduits à chaque fois à une mémoire de demi-images (15b) d'où ils sont conduits à chaque fois à une mémoire d'images complètes (16a) avec interpolation-avantageusement d'un extracteur de trame, où à partir de chaque demi-image (HB) d'un canal est produite par interpolation une image complète (VB) et dans chaque processus d'interpolation, les lignes manquant à chaque fois entre la demi-image de son canal sont recomposées par des lignes générées en une seconde demi-image (HB) et celle-ci est recomposée avec à chaque fois la demi-image d'origine (HB) en une image partielle complète ou respectivement en une paire (VB) de deux demi-images (HB) allant ensemble, pour un plus ample traitement, lesquelles images partielles dans chaque canal sont conduites, avantageusement par une autre mémoire d'images complètes (8c), un coupleur de signaux vidéo commun (10c) qui conduit plus loin, à la fréquence appropriée, avantageusement à quatre fois la fréquence de déviation horizontale, de manière alternée, les deux images complètes des deux canaux au moniteur (11).

11. Procédé selon l'une des revendications précédentes, caractérisé en ce que dans le cas de deux détecteurs de demi-image (4c) dans les deux canaux, l'affectation de l'une des demi-images (HB) est détectée soit dans l'un des deux canaux et après déroulement dans le temps de la demi-image détectée (HB), un signal de commande (s) est conduit au second canal ou bien l'affectation des demi-images dans un canal pour les images paires et dans le second canal pour les demi-images impaires est détectée.

12. Procédé selon l'une des revendications précédentes, caractérisé en ce que, pour le plus ample traitement des signaux vidéo, dans les deux canaux chaque demi-image (HB) est mémorisée dans une mémoire de demi-images (15b), et pour la dérivation d'une image complète ou respectivement d'une paire (VB) de deux demi-images allant ensemble (HB), à partir d'une demi-image (HB), le nombre de lignes de la demi-image (HB) est doublé au moyen d'un processus d'interpolation et les images partielles droite et gauche ou respectivement images complètes sont représentées, dans le temps, les unes après les autres, avec une fréquence de déviation horizontale appropriée, avantageusement quadruple sur un écran d'image (11).

13. Dispositif pour l'enregistrement et la restitution d'images vidéo stéréoscopiques de scènes observées avec deux systèmes d'acquisition de l'image (5a,5b) pour la prise d'images partielles stéréoscopiques (TB), caractérisé par
un coupleur de signaux (6a,6b) pour la commutation par canal des images partielles droite et gauche (TB) prises par les dispositifs d'acquisition d'image (5a,5b) ce par quoi on passe d'une première demi-image impaire (HB/A1.1....) d'un premier canal à une seconde image impaire (HB/B1.2....) d'un second canal,
- un appareil d'enregistrement (1a,1b) pour l'enregistrement des images partielles alternées (TB),
- un appareil de restitution (2a,2b) et un répartiteur vidéo (13a) qui le suit, qui détecte la première demi image (HB) et la conduit à un premier canal et qui détecte la seconde image partielle (HB) et la conduit à un second canal, de manière que les images partielles (HB) puissent être plus amplement traitées par canal.

14. Dispositif selon la revendication 13, caractérisé par un interpolateur (12a) et une mémoire d'images complètes (8a) par canal, où l'interpolateur (12a) génère une demi-image (HB) qui est conduite à la mémoire d'images complètes (8a) et qui est recomposée, avec la demi-image (HB) qui y est déjà présente, en une image partielle complète (TB).

15. Dispositif selon la revendication 13 ou 14, caractérisé en ce qu'un extracteur de trame (9a) est prévu pour la lecture des images partielles des premier et second canaux en tant qu'images complètes avec une fréquence d'image quadruple et avec un moniteur de restitution (11) pour la représentation des images vidéo.

16. Dispositif selon la revendication 13, 14 ou 15, caractérisé en ce que le répartiteur vidéo (13a) relié à la sortie de l'appareil de restitution (2a) est configuré pour la restitution des demi-images (HB) sur un premier et un second canal et en ce que, à chaque canal, est affectée une mémoire d'images partielles (15a) pour la mémorisation intermédiaire et la transformation des demi-images (HB) en images vidéo.
